# EUROPÄISCHE PATENTSCHRIFT

(11) **EP 1 753 599 B1**
(45) Veröffentlichungstag und Bekanntmachung des Hinweises auf die Patenterteilung: **25.11.2009**
(21) Anmeldenummer: 05743343.5
(22) Anmeldetag: 20.05.2005
(51) Int. Cl.: B29C 63/04, B29C 65/00

(54) **VORRICHTUNG UND VERFAHREN ZUM AUFBRINGEN VON FOLIE AUF EIN BAUELEMENT**
PROCESS AND DEVICE FOR APPLYING A FOIL TO A COMPONENT
PROCEDE ET DISPOSITIF D'APPLICATION D'UNE FEUILLE SUR UN COMPOSANT

(30) Priorität: 25.05.2004 DE 102004025520
(43) Veröffentlichungstag der Anmeldung: 21.02.2007
(73) Patentinhaber: SCHÜCO International KG, 33609 Bielefeld (DE); L & L Maschinen GmbH, 33428 Harsewinkel (DE)
(72) Erfinder: ATZLER, Norbert, 40724 Hilden (DE); LISSEK, Rolf, 33428 Marienfeld (DE)
(74) Vertreter: Dantz, Jan Henning
(86) Internationale Anmeldenummer: PCT/EP2005/005477
(87) Internationale Veröffentlichungsnummer: WO 2005/115726

(56) Entgegenhaltungen:
- DE-A1- 2 753 272
- DE-A1- 4 232 697
- DE-U1- 8 802 692
- FR-A- 2 822 098
- GB-A- 1 462 587
- US-A- 4 992 133
- US-A- 5 032 206
- US-A- 5 058 497

## Beschreibung

Die Erfindung betrifft eine Vorrichtung und ein Verfahren zum Aufbringen von Folie auf ein Bauelement.

Derartige Vorrichtungen und Verfahren sind aus dem Stand der Technik bekannt. Zunächst durchläuft ein mit einer Folie zu versehendes Bauelement wie ein Kunststoffprofil, dass z.B. mit farbiger Folie versehen werden soll, in derartigen Vorrichtungen i.allg. einen Vorbehandlungsabschnitt, in welchem ein Primem und Ablüften der Profiloberflächen erfolgt. Diese Vorbehandlung sowie die Folien- bzw. Fumierführung inkl. Kleberauftrag gehören zum bekannten Stand der Technik.

Eine entsprechende Vorrichtung bzw. Profilleistenkaschieranlage weist ferner ein Maschinenbett auf, das über seine gesamte Länge mit einer Leistenführung ausgerüstet ist. Diese Profilleistenführung kann als eine Rollenbahn, ein Förderband oder eine Förderkette ausgebildet sein.

Das durchlaufende Profil wird jeweils rechts und links der Fördereinrichtung durch entsprechende Führungsvorrichtungen geführt, die sowohl eine Gleitführung als auch eine Rollenführung sein kann. Der Transport der Profilleiste erfolgt entweder über die angetriebene Auflagekonstruktion, wie Rollenbahn, Förderband oder Förderkette bzw. er kann auch durch angetriebene Führungsrollen vorgenommen werden.

Am Anfang der Anlage befindet sich in der Regel die Primerstation, in welcher der Haftvermittler (Primer) auf die zu kaschierende Oberfläche aufgetragen wird. Dieser Haftgrund bzw. Primer ist in der Regel lösemittelhaltig, so dass im weiteren Durchlauf mittels eines Gebläses dieser Haftgrund abgelüftet wird.

Unmittelbar in diesem Bereich der Anlage bzw. nachgeschaltet befindet sich das Kaschiermaterial, wie Folie aus Kunststoff, Metall, Papier, Holz, Leder oder ähnlichem, das in der Regel von einer Rolle bzw. Haspel abgezogen wird.

Das Kaschiermaterial durchläuft dabei eine Kleberauftragvorrichtung und wird danach auf die zu kaschierende Oberfläche des Bauelementes, insbesondere eines Profilstabes geleitet.

Im bisher bekannten Stand der Technik folgen dann entsprechende Rollensätze, die aus einer Vielzahl von Einzelrollen bestehen, die mittels verstellbarer Stative auf die zu kaschierenden Flächen ausgerichtet sind. Da die zu kaschierenden Flächen beliebige Konturen aufweisen, ist es auch erforderlich, die Folie konkaven oder konvexen Formen mittels der Andruckrollen zuzuführen. Einen derartigen Stand der Technik zeigt die DE 88 02 692 U1

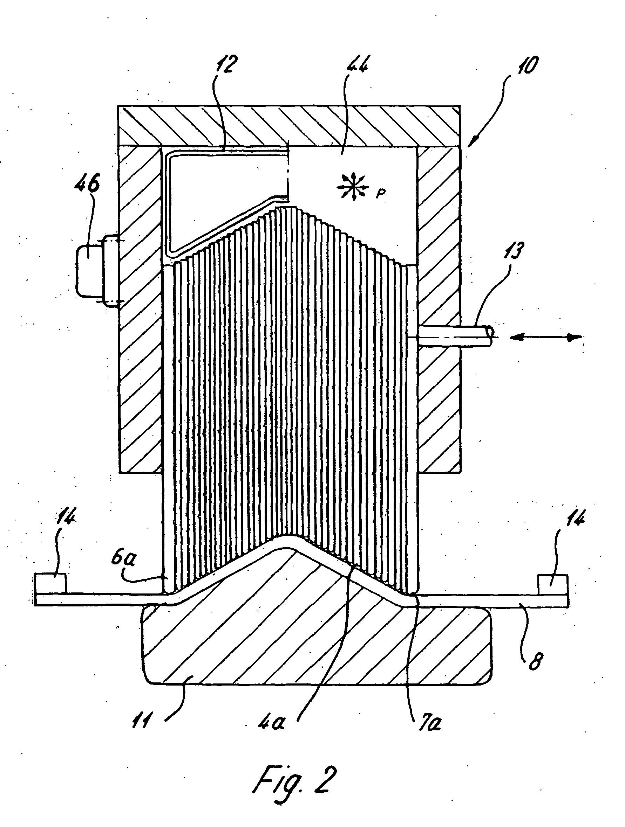

Eine gattungsgemäße Vorrichtung wird in der US 5 032 206 offenbart.
Hierin zeigt Figur 2 eine Vorrichtung zur Aufnahme und Festlegung eines in Achsrichtung profilierten Werkstücks, um es unter Zuhilfenahme eines Klebers mit einer Folie oder einem Fumierblatt zu kaschieren. Dabei wird eine Haltevorrichtung beschrieben, welche gemäß Spalte 2, Zeile 48-52 die gleiche Länge aufweist, wie das Werkstück selbst. Das Anpassen der Folie oder des Furniers gelingt hier mittels einer Vorrichtung aus dünnen Lamellen, die mittels Hydraulik- oder Pneumatikzylinder vertikal auf dem Werkstück bewegt werden können, wobei die Länge der Lamellen im Wesentlichen der des Werkstückes entspricht. Die Lamellenköpfe sind zudem zusätzlich mit elastischen Leisten versehen, um eine entsprechende Kontur der Profilierung zu erreichen. Zudem sorgt eine zusätzliche Formungsfolie dafür, dass das Folien- oder Furnierblatt auch seitlich auf die Kanten des Werkstückes umgelegt wird. Dabei wird jede Anformlamelle über separate Stellmittel und Einzelansteuerung durch Ventile ausgerichtet. Der hohe mechanische Aufwand verbunden mit einer Verlängerung der Taktzeit des Kaschierens infolge der Einzelansteuerung wirken sich nachteilig beim Kaschieren großer Stückzahlen aus.

Besondere Aufmerksamkeit gilt auch scharfkantigen Profilierungen, denen die Folie folgen muss. Hierzu ist es auch erforderlich, dass es bestimmte Rollen gibt, welche die Folie solange von der zu folierenden Kontur fernhalten, bis sie einseitig oder mittig anhaftet und blasenfrei nach beiden Seiten oder einer Seite hin aufgetragen werden kann.

Um ein Stauchen der Folie und damit Fehler bei der Kaschierung zu vermeiden, sind einzelne Folienandruckrollen zusätzlich angetrieben, deren Umfangsgeschwindigkeit vorzugsweise geringfügig größer oder kleiner ist als die Transportgeschwindigkeit des zu kaschierenden Gutes.

Die zu kaschierenden Profilleisten werden dicht schließend hintereinander durch die Anlage transportiert, um den Folienauftrag bzw. die Kaschierung kontinuierlich durchzuführen. Am Ende der Kaschieranlage steht dann eine Trenneinrichtung, die das Ende des jeweiligen Profilstabes erkennt und mittels eines Trennmessers die Folie zur Vereinzelung der Profilstäbe kappt.

Die zu folierenden bzw. zu kaschierenden Profilleisten finden Anwendung im Fenster-, Türen- und Fassadenbau oder auch bei Möbeln und Zierleisten jeder Art. Darüber hinaus wird diese Technik auch an Kanten fertiger Bauteile angewandt.

Das Anrollen der Folie an die teils stark profilierte Fläche der Profilstäbe erfolgt zum Teil mit speziellen Formrollen, die der jeweiligen Kontur nachgebildet sind.

Für das blasenfreie und einwandfreie Aufbringen der Folien ist eine Vielzahl von Rollen erforderlich, die beim Umrüsten der Anlage auf eine andere Profilleiste ausgetauscht bzw. auf die neue Kontur verstellt werden müssen.

Annähernd die gesamte Umrüstzeit einer solchen Anlage auf eine neue Profilleistenkontur ist den Andruckrollen zu widmen und beträgt je nach Kontur mehrere Stunden. Da die Anlage zudem testweise eingefahren werden muss, ergibt sich zudem ein zusätzlicher Materialverlust.

Um die Rüstzeiten zu minimieren, ist man dazu übergegangen, austauschbare Rollensätze vorzuhalten, die einmal eingestellt und dann beim Wechsel der Profilkontur lediglich ausgetauscht werden, die aber trotzdem noch eine gewisse Nachjustierung erfordern. Diese Rollenaustauschsätze haben den Nachteil, dass für jedes Profil entsprechende Rollensätze vorgehalten werden müssen, was bei einer entsprechend großen Profilvielfalt eine unzumutbare Lagerkapazität und Lagerorganisation für diese Rollensätze erfordert und unnötige Werkzeugkosten verursacht.

Die Rüstzeiten lassen sich derart zwar reduzieren, sie sind aber insbesondere für kleinere Losgrößen und Ersatzbedarf, wie sie der Markt oftmals auch fordert, nach wie vor unvorteilhaft lang.

Es ist deshalb die Aufgabe der Erfindung, die gattungsgemäße Vorrichtung und das gattungsgemäße Verfahren derart weiterzubilden, dass die Umrüstzeiten bei einem Wechsel zu einem neuen Bauelement mit anderer Profilkontur minimiert wird.

Die Erfindung löst diese Aufgabe in Hinsicht auf die Vorrichtung durch den Gegenstand des Anspruchs 1 und in Hinsicht auf das Verfahren durch den Gegenstand des Anspruchs 32 und den Gegenstand des Anspruches 33, wobei der letztgenannte Anspruch sowie die weiteren Ansprüche 34ff ein besonders vorteilhaftes Verfahren zum Einrichten der Vorrichtung betreffen.

Die Erfindung ermöglicht eine deutliche Verkürzung der Umrüstzeiten, da das wenigstens eine Lamellenpaket schnell und einfach sowie in universeller Weise an die Kontur eines neuen Bauelementes anpassbar ist. Da die Konturen eines neuen Bauelementes bzw. die zugehörigen Einstellungen insbesondere durch direkte oder indirekte Wegmessung auch abspeicherbar sind, wenn eine entsprechende Datenverarbeitungsanlage (numerische Steuerung) an der Vorrichtung vorgesehen ist, ist es auch möglich, die Einstellungen zu jeder erfassten Bauelementeart zu speichern und bei einem erneuten Bearbeiten dieser Bauelementesorte einfach die gespeicherten Werte abzurufen und die Vorrichtung schnell entsprechend einzustellen, indem die Achsen automatisch in die vorgegebene Position verfahren.

Darüber hinaus realisiert die Erfindung aber auch eine bedeutende Optimierung der Folien- bzw. Furnierandruck- bzw. Kaschiereinheiten, denn sie vermeidet die Notwendigkeit zur Lagerung austauschbarer Rollenanformsätze und konturangepasster Sonderrollen und ermöglicht damit auch eine wirtschaftliche Realisierung kleiner Fertigungslosgrößen und ermöglicht dabei insbesondere auch eine Einsparung von Werkzeugkosten.

Bevorzugt verfügen sämtliche Verstellachsen über eine direkte oder indirekte Wegmessung , so dass in vorteilhafter Weise über eine numerische Steuerung vorgegebene Wegpunkte abgerufen und angefahren werden können.

Weitere vorteilhafte Ausgestaltungen sind den übrigen Ansprüchen zu entnehmen.

Nachfolgend wird die Erfindung anhand von Ausführungsbeispielen unter Bezug auf die Zeichnung anhand von Ausführungsbeispielen näher beschrieben, wobei auch weitere Vorteile der Erfindung deutlich werden. Es zeigt:
- Fig. 1: eine schematische Ansicht eines Teils einer erfindungsgemäßen Vorrichtung während des Auftragens einer Folie auf ein Bauelement;
- Fig. 2: einen Schnitt durch einen schematisch dargestellten Teil der Vorrichtung im Bereich eines Lamellenpaktes während des Auftragens der Folie auf ein Bauelement;
- Fig. 3: einen Schnitt durch einen schematisch dargestellten Teil der Vorrichtung im Bereich einer Umlenkrolle;
- Fig. 4: eine Seitenansicht einer Arbeitsstation der Vorrichtung;
- Fig. 5: einen Schnitt durch einen schematisch dargestellten Teil der Vorrichtung im Bereich einer anderen Ausführungsform einer Umlenkrolle;
- Fig 6: ein einzelnes Anformaggregat aus einer Sicht längs der Profilachse;
- Figur 7: eine Ansicht der Anordnung des Anformaggregates innerhalb der Komplettanlage; und
- Fig. 8: eine Seitenansicht einer schematisch dargestellten Vorrichtung mit mehreren Arbeitsstationen.

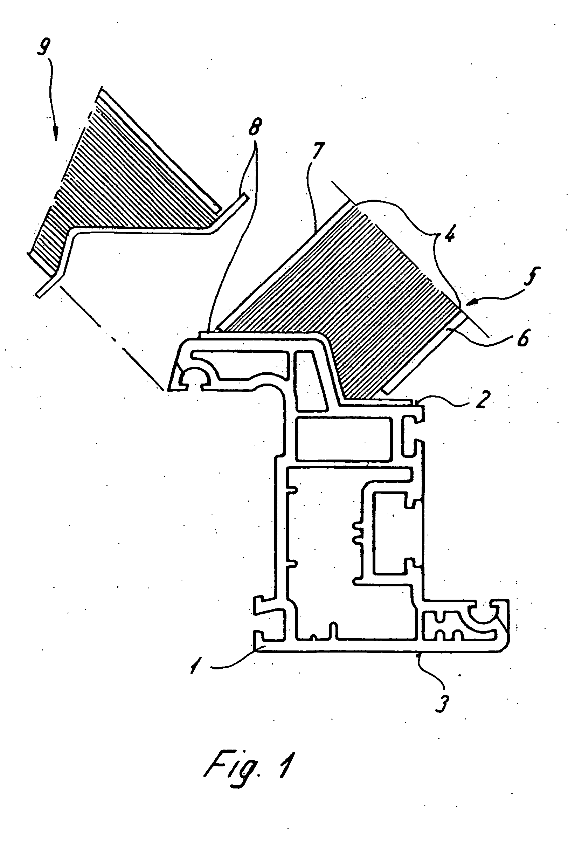

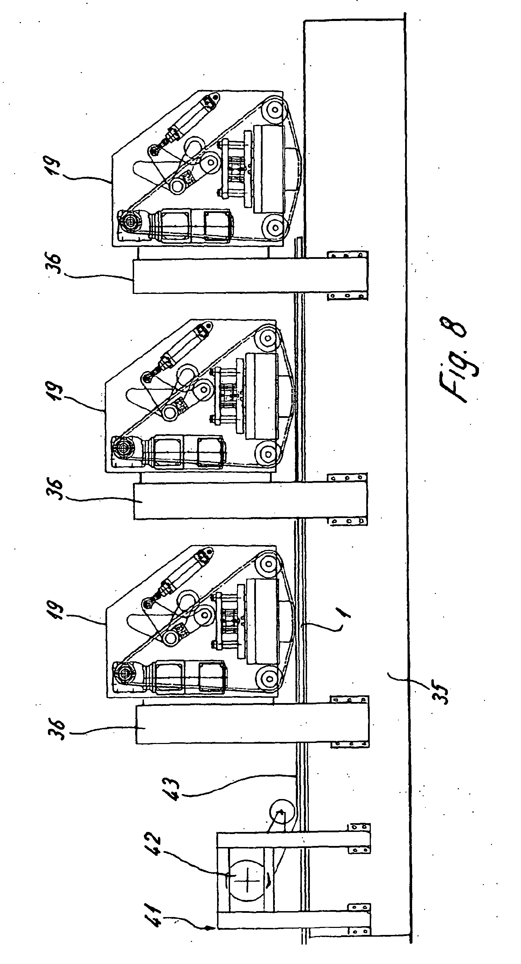

Figur 1 zeigt ein Bauelement, das beispielhaft als langgestreckte Profilleiste 1 aus Kunststoff ausgebildet ist, wie sie beispielsweise zur Herstellung eines Fensterelementes, insbesondere eines Fensterflügels oder dgl. eingesetzt wird. Die Vorrichtung eignet sich prinzipiell zum Aufbringen von Folie auf langgestreckte Bauelemente aller Art und aus verschiedensten Materialen wie z.B. Kunststoff, Metall Die Profilleiste 1 weist zwei einander gegenüberliegende Flächen 2, 3 auf, wobei hier die Oberfläche 2 mit der Folie - hier nicht zu erkennen, siehe hierzu das Bezugszeichen 43 in Fig. 8 - kaschiert werden sollen. Die Oberfläche 2 - welche in Fig. 1 kaschiert wird, ist stark profiliert ausgebildet, wobei das Kaschieren dieser Profilierung mittels der Vorrichtung in besonders einfacher und einwandfreier Weise erfolgt.

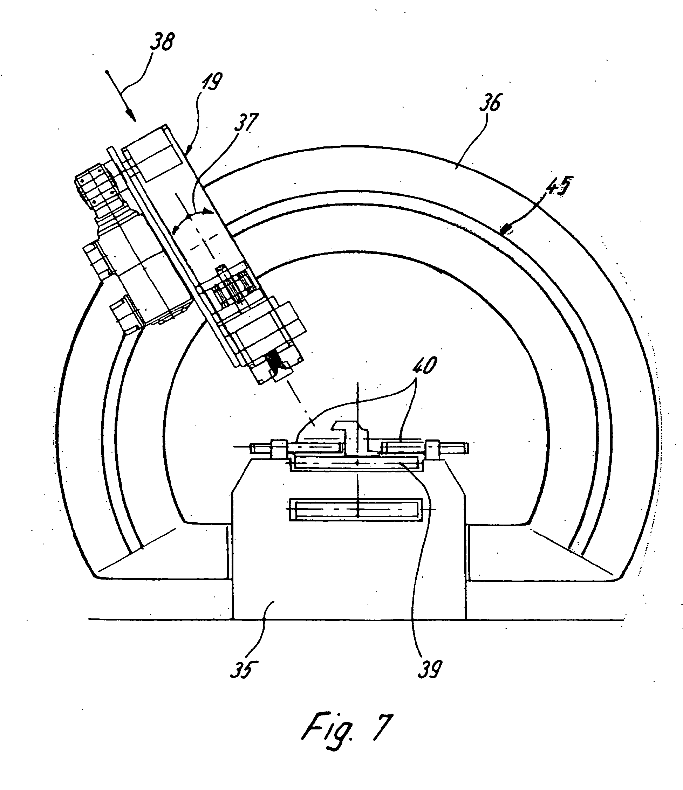

Der in Fig. 1 dargestellte Vorrichtungsteil gehört zu einer übergeordneten Vorrichtung bzw. Maschine, die ein hier nicht dargestelltes Maschinengestell umfasst - siehe hierzu Fig. 7 und 8 - das wiederum eine Transporteinrichtung wie eine Kette aufweist, auf der das Bauelement 1 aufliegt und durch die Vorrichtung transportiert wird.

Fig. 1 zeigt zwei Lamellenpakete 5, 9 aus einer Mehrzahl einzelner, nebeneinander liegender Lamellen 4, die jeweils relativ zueinander verstellbar - insbesondere verschiebbar - sind, so dass mittels der einzelnen - hier gleich dicken Lamellen 4 des Lamellenpaketes die Profilierung der Fläche 3 des Bauelementes, auf welche die Folie 4 aufgetragen werden soll, nachgebildet werden kann, wenn diese direkt oder indirekt über ein zwischengeschaltetes Element an die Oberfläche gedrückt werden.

Die Lamellen 4 werden möglichst dünn ausgeführt, um dadurch optimal quasi jede flächige Kontur nachbilden zu können. Die Dicke der einzelnen Lamellen bewegt sich vorzugsweise in einem Bereich von 0,3 mm im Minimum bis zu mehreren mm, vorzugsweise jedoch im Bereich von 0,3 - 0,8 mm.

Begrenzt wird das Lamellenpaket 5, 9 durch entsprechend relativ zu den einzelnen Lamellen 4 dicker und stabiler ausgeführte Randlamellen 6 und 7, welche die Aufgabe haben, die übrigen Lamellen zu stabilisieren.

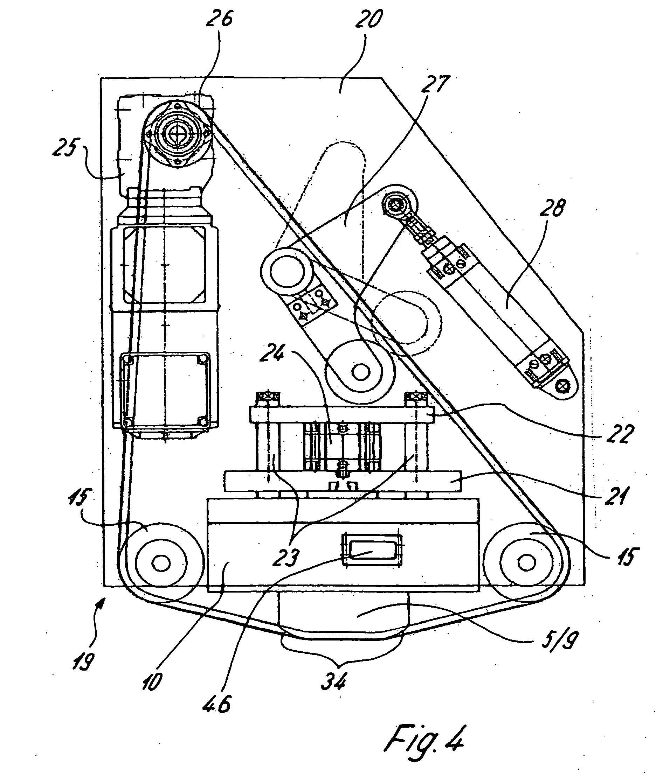

Wie insbesondere in Fig. 4 gut zu erkennen, liegt zwischen dem Bauelement und dem Lammellenpaket 5 ein Formband 8, welches nach Art eines umlaufenden Riemens am Lamellenpaket 5 vorbeiläuft. Zwischen der Profilleiste bzw. der Kaschierfolie und dem Lamellenpaket befindet sich dieser als Formband bezeichnete Flachriemen, der endlos über Umlenkrollen 15 ein Zwischenlager zwischen dem Lamellenpaket 5 und der Profil- bzw. Folienkontur bildet, wodurch auch ein gleichmäßiger Flächenandruck auf die Folierungen realisiert wird. Das Lamellenpaket 5 kann sich so jeder beliebigen Kontur der Profilleiste anpassen. Das Formband 8 wird dabei angetrieben mit einer Geschwindigkeit, die annähernd der Durchlaufgeschwindigkeit der Profilleiste 1 entspricht. Die Umlaufgeschwindigkeit des Formbandes 8 kann je nach Bedarf zur Durchlaufgeschwindigkeit der Profilleiste 1 eine Differenzgeschwindigkeit aufweisen.

Vorzugsweise sind die Lamellen 4 sowie die Randlamellen 6 und 7 an ihren Schmalseiten 4a, 6a, 7a in ihrem zum Bauelement weisenden Bereich gerundet ausgebildet - siehe auch Fig. 2 - , um sich so optimal der Kontur des Bauelementes anpassen zu können und gegenüber dem umlaufenden Formband 8 verschleißfreier zu wirken.

Mit dem Bezugszeichen 9 ist in Fig. 1 ein weiteres Lamellenpaket einer weiteren nachfolgenden Vorrichtung bzw. einer weiteren Arbeitsstation der übergeordneten Maschine dargestellt, welche einem anderen Profilsektor der Profilleiste 1 zugeordnet ist.

Je nach der Komplexität der Profilierung sind wenigstens eine oder mehrere einander nachgeschaltete Arbeitsstationen erforderlich. In der Regel wird eine Maschine zwischen 3 und 6 Arbeitsstationen bzw. Andrück- und Anformvorrichtungen (auch "Anform-Aggregate genannt") aufweisen.

Die Figur 2 zeigt den prinzipiellen Aufbau eines Lamellenpaketes in einem entsprechenden Lamellengehäuse 10. Die Profilleiste 11 weist hier beispielhaft eine gewölbte Kontur auf, auf die das Lamellenpaket aufgesetzt ist. Sämtliche Lamellen weisen eine gleiche endliche Länge auf und sind von dem Lamellengehäuse 10 bis auf ihre Austrittsfläche im Bereich der Bezugszeichen 4a, 6a, 7a schließend umgeben.

Durch Aufbringen eines Druckes P in einen Hohlraum 44 zwischen dem Lamellenpaket 5, 9 und dem umschließenden Lamellengehäuse 10 in dem von den Schmalseiten abgewandten Enden der Lamellen 4 sowie 6 und 7 werden die einzelnen Lamellen 4, 6, 7 mit einer vorgegebenen Kraft aus dem Lamellengehäuse heraus- und mitsamt dem Formband 8 an das Bauelement angedrückt, so dass die nebeneinaderliegenden Lamellen sich einzeln an der Kontur der Profilleiste orientieren und in ihrer Gesamtheit die Profilierung des Bauelementes im Bereichs des Lamellenpakets nachbilden.

Der hierzu notwendige Druck wird direkt oberhalb der Lamellen in das Lamellengehäuse eingebracht, wobei vorrangig Luft zum Einsatz kommt.

Da die Lamellen 4, 6, 7 mit geringem Spiel zueinander stehen, um ihre relative Beweglichkeit, insbesondere Verschiebbarkeit zu sichern, ergibt sich eine gewisse Leckage. Soll diese Leckage vermieden werden, kann in dem Hohlraum 44 zwischen dem Lamellenpaket 5, 9 und dem Lamellengehäuse 10 ein befüllbarer Schlauch 12 oder ein Balg oder eine Membrane angeordnet werden. Als Druckmedium kann ein Fluid wie Luft oder eine Flüssigkeit verwendet werden, um einen pneumatischen oder hydraulischen Antrieb der Lamellen zu realisieren. Denkbar, aber weniger einfach umzusetzen, ist auch eine rein mechanische und/oder elektromotorische Betätigung der einzelnen Lamellen des Lamellenpaketes.

Durch Beaufschlagung des Schlauches 12 wird die Leckage in einfacher Weise vermieden und die Einzellamellen 4, 6, 7 werden gleichmäßig an das Bauelement gedrückt.

Nach erfolgter Ausrichtung bzw. nach der Anpassung des Lamellenpaketes 5, 9 an die entsprechende Kontur des Bauelementes - in Fig. 2 die Profilleiste 11 - wird das Lamellenpaket 5 über eine Klemmeinrichtung 13, wie hier beispielhaft dargestellt, fixiert, mit der die Lamellen 4 gegeneinander gepresst und in dieser Position relativ zueinander klemmend fixiert werden, um derart die zu bearbeitende Profilkontur quasi einzufrieren bzw. zu arretieren, um dauerhaft die Kontur des Bauelementes 1, 11 nachbilden. Hier wird bereits ein besonderer Vorteil dies Lösung sichtbar, nämlich die einfache und unkomplizierte Anpassbarkeit des Lamellenpaktes an verschiedenste Bauelementkonturen, was das Einrichtungen und Umstellen der Vorrichtung bei einem Wechsel der zu bearbeitenden Profilkontur(en) deutlich verkürzt und vereinfacht, was insbesondere im Fenster-, Türen und Fassadenbau von Vorteil ist, wo häufig die zu bearbeitenden Profilkonturen wechseln.

Da die Einzellamellen 4,6,7 mit einer gewissen Haftreibung aneinander haften, insbesondere auch gefördert durch einen leichten auf ihnen haftenden Schmierfilm, kann es infolge dieser Reibung dazu kommen, dass sie sich vor einem - ggf. auch erneuten - Ausrichten auf eine neue Profilkontur nicht wieder vollständig selbsttätig voneinander lösen. Um diesem Problem Abhilfe zu schaffen, ist dem Lamellenpaket eine Vibrationseinrichtung 46 (ein Rüttelelement) zugeordnet. Diese ist derart angeordnet und ausgelegt, dass sie die Haftreibung überwindet und die Einzellammellen 4,6,7 bei einem Ausrichten rüttelnd voneinander "löst". Die Vibrationseinrichtung wird insbesondere aktiviert, wenn die Einzellammellen auf eine neue Profilkontur bzw. Profilleiste 11 ausgerichtet werden. Sie kann vorteilhaft auf dem Lamellengehäuse angeordnet sein (Fig. 2, Fig. 4) oder an einem anderen geeigneten Ort am oder im Lamellengehäuse. Nach einer Variante wird sie auf das Lamellengehäuse 10 aufgeschraubt. Alternativ kann sie in dieses integriert sein. Als Vibrationselement kann ein Elektromotor eingesetzt werden, der eine Masse in lineare oder rotierende Schwingung versetzt (z.B. eine insbesondere mit Unwucht gelagerte rotierende Masse).

Als Zwischenlage zwischen dem auf die Kontur eingestellten Lamellenpaket 5 und der aufzubringenden Folie 43 bzw. der Profilleiste 11 befindet sich das endlos umlaufend geführte Formband 8. Das Formband 8 besteht besonders bevorzugt in seinem Inneren aus einem reckarmen Gewebe, das auf der zur Folie 43 weisenden Seite mit einer elastischen Beschichtung versehen ist, die dafür sorgt, dass der von den Lamellen 4, 6, 7 ausgeübte Druck gleichmäßig, flächig auf die Folie 43 übertragen wird und aus einer inneren Beschichtung, die mit dem Lamellenpaket 5, 9 in Reibverbindung steht und dafür zu sorgen hat, dass die Reibung zwischen dem Formband 8 und dem Lamellenpaket 5, 9 gering und verschleißarm gehalten wird.

Das Formband 8 ist in Querrichtung biegelabil, so dass es sich im Bereich des Lamellenpaketes zwangfrei der jeweils vorgegebenen Kontur anpassen kann. Auf der Rückseite des Formbandes befinden sich vorzugsweise Führungsleisten 14 (siehe Fig. 2), welche die Aufgabe haben, das Formband 8 im Bereich der Umlenkrollen und Antriebsrollen sauber zu führen.

Anstelle der Führungsleisten 14 sind auch andere Maßnahmen zur Führung des Formbandes denkbar, wie z.B. Umlenkrollen mit seitlicher Bordscheibe oder Bund, zwischen denen das Formband 8 gerührt wird.

Beim Anpassen der Vorrichtung an eine neue Kontur wird einfach das Lamellengehäuse 10 in eine entsprechende Position der Profilleiste gebracht, wobei die Klemmung des Lamellenpaketes 5, 9 gelöst ist. Durch Anfahren des Lamellengehäuses an die Leistenkontur und/oder ein Antreiben der Einzellamellen 4, 6, 7, insbesondere durch Aufbringen des Innendruckes P im Lamellengehäuse 10 werden die Einzellamellen 4, 6, 7 entsprechend der vorgegebenen, zu bearbeitenden Kontur ausgerichtet. Nach erfolgter Ausrichtung des gesamten Lamellenpaketes 5, 9 findet wiederum eine Klemmung statt und die Vorrichtung ist auf eine neue Kontur eingestellt.

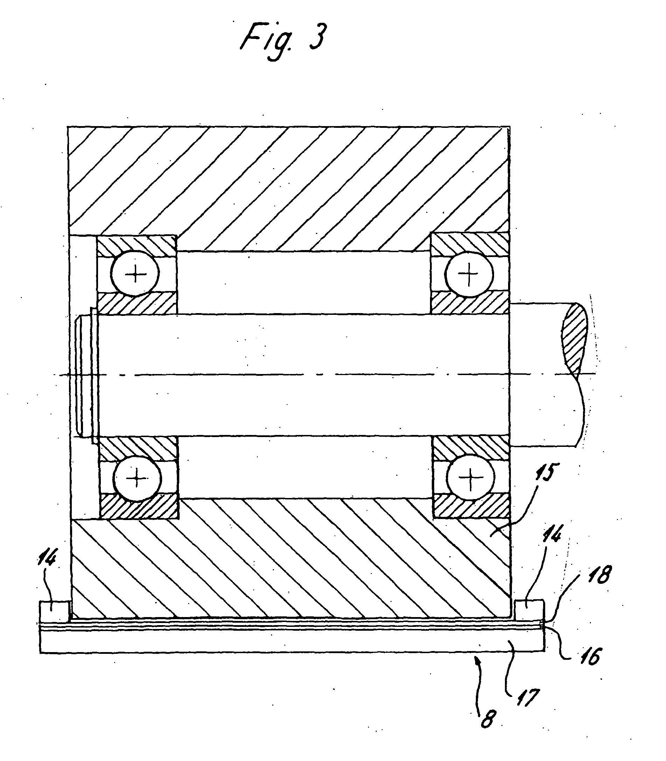

Figur 3 zeigt das Zusammenwirken des Formbandes 8 mit der Umlenkrolle 15, die auch die Führung des Formbandes 8 übernimmt. Das Formband 8 weist jeweils an seinen seitlichen Enden (siehe Fig. 2 und 3) die Führungsleisten 14 auf, welche sich an den Flanken der Umlenkrolle 15 abstützen und so das Formband 8 eindeutig führen.

In Fig. 3 ist auch der bevorzugte Aufbau des Formbandes 8 dargestellt, das vorzugsweise auf einem weitgehend reckfreien Gewebeband 16 basiert, auf dem sich wiederum nach außen die elastische Schicht 17 aufbaut, während zur Innenseite bzw. zu den Lamellen 4 hin die verschleiß- und reibungsarme Schicht 18 angeordnet ist.

Figur 4 zeigt eine einzelne Folienanformeinheit 19 der Vorrichtung, die mehrere derartige Einheiten aufweisen kann, um nacheinander verschiedene Abschnitte der Oberfläche (z.B. oben sowie weiter rechts und weiter links an einem Bauelement) zu bearbeiten.

Die einzelne Folienanformeinheit 19 weist eine Grundplatte 20 auf, auf welcher die Umlenkrollen 15 rechts und links neben dem Lamellengehäuse 10 angeordnet sind. Mittels Führungsplatten 21 und 22, die auf der Grundplatte 20 angeordnet sind, ist das Lamellengehäuse 10 inkl. des Lamellenpaketes 5, 9 über Führungswellen 23 verschiebbar gelagert.

Zwischen den Führungsplatten 21 und 22 befindet sich ein Zylinder 24, der pneumatisch oder hydraulisch angetrieben wird und der das Lamellengehäuse 10 über die Führungswellen 23 bewegen kann. Die Verstellung bzw. der Verfahrweg des Zylinders 24 beträgt hier ca. 10 mm. Der Zylinder dient in diesem Fall der Einstellung des Anpressdruckes des Lamellenpaketes 5, 9 auf das zu beschichtende Profil und zum Toleranzausgleich bezogen auf das zu kaschierende Bauelement.

Bevorzugt kann die Folienanformeinheit bzw. das Anform-Aggregat 19 in unterschiedlicher Lage an das Bauelement 11 angreifen bzw. angesetzt werden. Das Anform-Aggregat 19 kann - wie in der Zeichnung - vertikal angeordnet sein, es kann aber auch horizontal oder schräg von unten an das Bauelement 11 angreifen. In jedem Fall ändern sich dann die auf das Bauelement 11 wirkenden Gewichtskräfte des Lamellenpaketes 5, 9 auf das Profil. Entsprechend bietet es sich an, den Druck des Zylinders 24 so einzustellen, dass in jeder Arbeitslage des Anformaggregates der Anpressdruck des Lamellenpaketes 5, 9 und damit des Formbandes 8 gleich groß ist bzw. auf die jeweiligen Bedürfnisse eingestellt werden kann. Über den Zylinder 24 ist ein Gewichtsausgleich realisierbar.

Auf der Grundplatte ist weiterhin ein Antrieb 25 für das Formband 8 vorgesehen, dessen Antriebsrad 26 ebenfalls vom Formband 8 umschlossen ist. Das Formband 8 umschlingt riemenartig drei ein Dreieck bildende Rollen, d.h. die zwei Rollen 15, die Antriebsrolle 26 sowie das Lamellenpaket 5, 9, die etwas über die Flucht zwischen den beiden am nächsten zu dem Profil 11 hin ausgerichteten Rollen 15 vorsteht.

Als weiteres Funktionselement ist auf der Grundplatte 20 eine Bandspanneinrichtung 27 angeordnet, die das Formband 8 auf vorgegebener Spannung hält. Diese Bandspanneinrichtung ist ebenfalls mit einem hydraulisch bzw. pneumatisch betätigten Zylinder 28 ausgestattet, über den die Bandspannung einstellbar und regelbar ist.

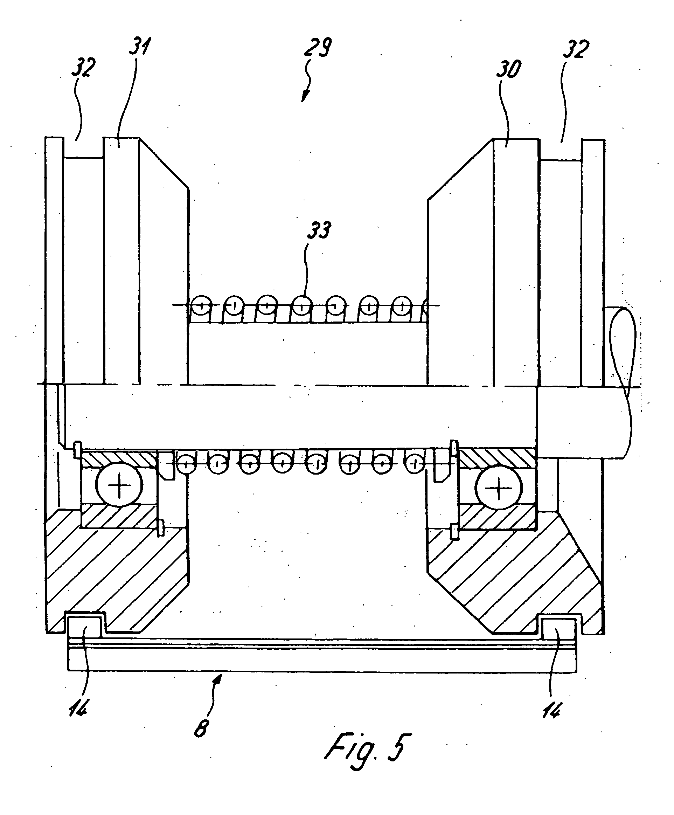

Die Figur 5 ist eine Ergänzung zur Ausführung gemäß Figur 3 und zeigt eine Alternative zu der Umlenkrolle 15. Diese Umlenkrolle 29 besteht aus zwei einzelnen Rollenscheiben 30 und 31, die umlaufend eine Nut 32 aufweisen, welche die Führungsleisten 14 des Formbandes 8 übergreifen.

Das besondere an dieser Rollenausführung ist, dass die Rollenscheiben 30, 31 relativ zueinander beweglich ausgebildet sind und ihren Abstand verändern können, je nach Verformung des Formbandes. Die Rollenscheiben können durch eine Feder 33 auf Abstand gehalten werden, wobei die Feder eine solche Kennlinie aufweist, dass sie bei Deformation des Formbandes 8 im Bereich des Lamellenpaketes der Querkontraktion des Formbandes nachgeben kann.

Gezeigt ist, dass die Rollenscheibe 30 auf der Achse axial fixiert ist, während die Rollenscheibe 31 axial beweglich ausgestaltet ist. Alternativ ist aber auch möglich, dass beide Rollenscheiben 30 und 31 zueinander beweglich ausgebildet sein können.

Aus der Figur 4 ist zu erkennen, dass das Lamellenpaket 5, 9 gegenüber der Flucht der beiden Umlenkrollen 15 vorsteht, so dass das Formband 8 unter einem flachen Winkel über das Lamellenpaket 5, 9 abgelenkt wird. Hierdurch ist sichergestellt, dass lediglich im Bereich der Lamellenform das Formband 8 mit dem zu kaschierenden Profil in Berührung kommt. Zu diesem Zweck sind die Lamellen 4, 6, 7 des Lamellenpaketes 5, 9 mit entsprechenden Radien 34 versehen, um ein verschleißfreies Führen zwischen dem Lamellenpaket 5, 9 und dem Formband 8 zu gewährleisten.

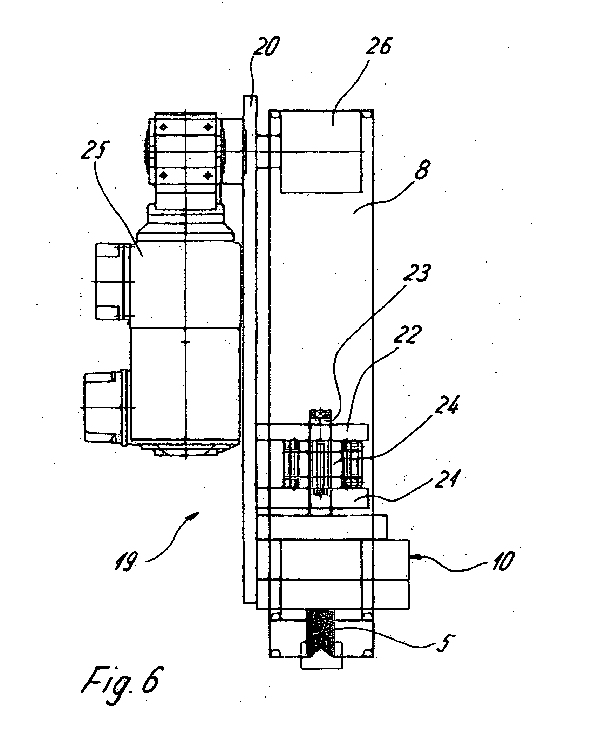

In Figur 6 ist ein einzelnes Anformaggregat 19 aus einer Sicht längs der Profilachse dargestellt. Auf der Rückseite der Grundplatte 20 befindet sich der Antrieb 25 für das Formband 8, das über die Antriebsrolle 26 angetrieben und am Lamellenpaket 5 entlang geführt wird. Gut ist dabei die Anordnung des Lamellengehäuses zu erkennen, insbesondere die Führungsplatten 21 u. 22, der Zylinder 24 sowie die Führungswellen 23.

Figur 7 zeigt eine Ansicht der Anordnung des Anformaggregates 19 innerhalb der gesamten Vorrichtung. An einem Maschinenbett 35 ist für jedes Anformaggregat ein Ständer 36 angeordnet, der vorzugsweise eine kreisbogenförmige Führung 45 aufweist. An einem entsprechenden Unterschieber ist dann das jeweilige Anformaggregat 19 verstellbar geführt. Darüber hinaus ist das Anformaggregat 19 auf dem nicht dargestellten Unterschieber verschwenkbar 37 gelagert. Zusätzlich ist das Anformaggregat 19 entsprechend der Bewegungsangabe 38 verschiebbar.

Alle Stell- und Bewegungsachsen wie z.B. die Verstellbarkeit in der Führung 45 sind durch Stellantriebe realisiert bzw. angetrieben, die über eine speicherbare Positionssteuerung verfügen.

Im Maschinenbett 35 ist die Profiltransporteinrichtung 39 angeordnet, auf der das zu kaschierende Gut, z. B. das Profil 1, aufgelegt und transportiert wird.

Wie bereits zum Stand der Technik beschrieben, kann die Transporteinrichtung 39 eine Rollenbahn, ein Transportband oder auch eine Transportkette sein, wobei vorzugsweise eine Transportkette eingesetzt wird, deren Kettenglieder auf einer horizontalen Auflage des Maschinenbettes geführt werden, so dass Durchbiegungen des zu kaschierenden Gutes ausgeschlossen werden können. Zu beiden Seiten der Profiltransporteinrichtung 39 sind Profilführungen 40 angeordnet, wovon zumindest eine Seite dieser Führungen automatisch anstellbar und über eine Positionssteuerung steuerbar sind.

Der gezeigte Aufbau ist beispielhaft. Anstelle der vorteilhaften Planetenführung des Anformaggregates kann auch eine herkömmliche Verfahrbarkeit mittels Supporten verwendet werden.

Die Figur 8 zeigt vereinfacht den grundsätzlichen Aufbau einer solchen Kaschierungsanlage für profilartige Bauteile. Auf einem gemeinsamen Maschinenbett 35 sind die verschiedenen Stationen mittels Gestellen bzw. Ständern angeordnet.

Am Anfang befindet sich der Bereich der Vorbehandlung 41, die vom zu kaschierenden Profilstab 1 durchlaufen wird, wobei die zu kaschierende Oberfläche mit einem Haftvermittler geprimert wird. Entsprechende Luftdüsen sorgen für eine schnelle Ablüftung des aufgetragenen Haftvermittlers. Im unmittelbaren Anschluss innerhalb der Vorbehandlung ist die Folie als Rolle bzw. Coil 42 angeordnet. Die abgerollte Folie 43 durchläuft eine Kleberauftragvorrichtung und wird dann direkt zwischen das zu kaschierende Profil und dessen Auflage geführt. Die anhaftende Folie wird dann von den einzelnen Anformaggregaten - wie zuvor beschrieben - auf die Profilkontur aufgebracht.

Je nach Kompliziertheit der Profilierung und der Leistenabmaße können beliebig viele Anformaggregate hintereinander angeordnet werden.

Jedes erstmals zu bearbeitende Bauelement einer bestimmten Kontur wird in der Vorrichtung zunächst auf die Transporteinrichtung aufgelegt und mittels der Profilfiihrungen ausgerichtet. Die Ist-Positionen der Profilfiihrungen 40 werden in der Programmsteuerung gespeichert, um sie wieder abrufen zu können, wenn dieses neue Profil erneut zur Kaschierung ansteht.

In gleicher Weise wird dann mit den Anformaggregaten 19 verfahren, die so an das Profil herangefahren werden, dass das jeweilige Lamellenpaket seine Zuordnung zur Profilierung erhält und die Kontur entsprechend nachbildet. Hiernach werden die Positionen der einzelnen Verstellachsen im Programm festgehalten, um sie gleichfalls jederzeit wieder abrufen zu können.
Sämtliche Verstellachsen verfügen über eine direkte oder indirekte Wegmessung, so dass über eine numerische Steuerung vorgegebene Wegpunkte abgerufen und angefahren werden können.

Die Einrichtung für ein Bauelement mit unbekannter und noch nicht erfasster Profilierung erfolgt in folgenden Schritten:
- das unbekannte Bauelement 1, 11 vorgegebener Profilierung wird in die Vorrichtung eingeschoben/eingelegt,
- die Profilführung 40 wird auf das unbekannte Bauelement 1, 11 eingestellt,
- die Lamellenpakete 5 der einzelnen Folienandruckeinheiten 19 werden entspannt,
- die Folienandruckeinheiten 19 werden manuell in ihre Positionen gefahren,
- der Hohlraum 44 innerhalb der Lamellengehäuse 10 wird unter Druck gesetzt, die Lamellen 4, 6, 7 fahren manuell auf die Oberfläche des zuerfassten Bauelements und bilden dessen Kontur nach,
- die Position des Lamellenpakets 5 wird klemmend arretiert,
- der Anpressdruck im Zylinder 24 wird eingestellt und
- sämtliche eingestellten Werte und Positionen werden gespeichert.

Die Einrichtung eines bekannten bzw. bereits erfassten Profils erfolgt dann in folgenden Schritten:
- sämtliche eingestellten Werte und Positionen werden entsprechend einer Eingabe an der NC-Steuerung (z.B. Artikelnummer des Profils, die auch beim Erfassen gespeichert wurde) abgerufen,
- die Profilführung 40 stellt sich auf das vorgegebene erfasste Bauelement 1, 11 ein,
- das erfasste Bauelement 1, 11 vorgegebener Profilierung wird in die Vorrichtung eingeschoben/eingelegt,
- die Lamellenpakete 5 der einzelnen Folienandruckeinheiten 19 werden entspannt,
- die Folienandruckeinheiten 19 fahren programmgesteuert in ihre festgelegten Positionen,
- der Hohlraum 44 innerhalb der Lamellengehäuse 10 wird unter Druck gesetzt, die Lamellen 4, 6, 7 fahren auf die Oberfläche des erfassten Profils und bilden dessen Kontur nach,
- die Position des Lamellenpakets 5 wird klemmend arretiert, und
- der Anpressdruck im Zylinder 24 stellt sich automatisch auf den vorbekannten Wert ein.

### Bezugszeichen

| | |
|---|---|
| Profilleiste | 1 |
| Oberfläche | 2 |
| Fläche | 3 |
| Lamelle | 4 |
| Schmalseiten | 4a, 6a, 7a |
| Lamellenpaket | 5 |
| Randlamelle | 6 |
| Randlamelle | 7 |
| Formband | 8 |
| Lamellenpaket | 9 |
| Lamellengehäuse | 10 |
| Profilleiste | 11 |
| Schlauch | 12 |
| Klemmeinrichtung | 13 |
| Führungsleiste | 14 |
| Umlenkrolle | 15 |
| Gewebeband | 16 |
| Schicht | 17 |
| Schicht | 18 |
| Folienanformeinheit | 19 |
| Grundplatte | 20 |
| Führungsplatte | 21 |
| Führungsplatte | 22 |
| Führungswelle | 23 |
| Zylinder | 24 |
| Antrieb | 25 |
| Antriebsrolle | 26 |
| Bandspanneinrichtung | 27 |
| Zylinder | 28 |
| Umlenkrolle | 29 |
| Rollenscheibe | 30 |
| Rollenscheibe | 31 |
| Nut | 32 |
| Feder | 33 |
| Radius | 34 |
| Maschinenbett | 35 |
| Führungsbahn | 36 |
| Unterschieber | 37 |
| Profiltransporteinrichtung | 39 |
| Profilführung | 40 |
| Vorbehandlungsbereich | 41 |
| Coil | 42 |
| Folie | 43 |
| Hohlraum | 44 |
| Führung | 45 |
| Vibrationseinrichtung | 46 |

## Patentansprüche

1. Vorrichtung zum Aufbringen von Folie auf ein Bauelement, insbesondere zum Ausbringen von Folie (43) auf ein langgestrecktes, profilartiges Bauelement mit einer vorgegeben Oberflächenkontur, mit wenigstens einem oder mehreren Lammellenpaket(en) (5, 9) aus relativ zueinander verstellbaren Lamellen (4, 6, 7) zum konturgerechten Andrücken der Folie (43) an die Oberfläche des Bauelements (1, 11), wobei die einzelnen Lamellen (4, 6, 7) mittels eines fluidbetätigten Antriebs in Richtung des Formbandes (8) beweglich sind,
**dadurch gekennzeichnet, dass**
a) zwischen dem Bauelement (1, 11) und dem Lammellenpaket (5, 9) ein Formband (8) angeordnet ist,
b) das Lamellenpaket (5) in einem Lamellengehäuse (10) angeordnet ist, aus dem die zum Formband (8) weisenden Endbereiche der einzelnen Lamellen (4, 6, 7) vorstehen, wobei das Fluid in einen Hohlraum (44) zwischen dem Lamellenpaket (5, 9) und dem umschließenden Lamellengehäuse (10) einbringbar ist,
c) wobei in dem Hohlraum (44) zwischen dem Lamellenpakel (5, 9) und dem Lamellengehäuse (10) ein befüllbarer Schlauch (12) oder ein Balg oder eine Membrane angeordnet ist.

2. Vorrichtung nach Anspruch 1, **gekennzeichnet durch** wenigstens eine oder mehrere Folienandruckeinheiten (19), die jeweils eines oder mehrere der Lamellenpakete (5, 9) aufweisen.

3. Vorrichtung nach einem der vorstehenden Ansprüche, **dadurch gekennzeichnet, dass** jedes Lamellenpaket (5, 9) mehrere mittlere dünne Lamellen (4) und jeweils diese mittleren Lamellen als Ganzes seitlich einfassende, dickere Randlamellen (6, 7) ausweist.

4. Vorrichtung nach Anspruch 3, **dadurch gekennzeichnet, dass** die Dicke d der einzelnen mittleren Lamellen (4) folgender Bedingung genügt: d>- 0, 3mm.

5. Vorrichtung nach Anspruch 3, **dadurch gekennzeichnet, dass** die Dicke d der einzelnen mittleren Lametten (4) folgender Bedingung genügt: 0,8 >= d >-0,3 mm.

6. vorrichtung nach einem der vorstehenden Ansprüche, **dadurch gekenn-zeichnet, dass** die Lamellen (4, 6, 7) in ihrem zum Bauelement weisenden Bereich gerundet ausgebildet sind.

7. Vorrichtung nach einem der vorstehenden Ansprüche, **dadurch gekennzeichnet, dass** das Formband (8) als umlaufender Flachriemen ausgebildet ist, der endlos über Umlenkrollen (15) und/oder eine Antriebsrolle (16) umläuft und ein Zwischenlager zwischen dem Lamellenpaket (5, 9) und der Profil- bzw. Folienkontur bildet.

8. Vorrichtung nach einem der vorstehenden Anspruch, **dadurch gekennzeichnet, dass** das Formband (8) mit einer Geschwindigkeit antreibbar ist, die zur Durchlaufgeschwindigkeit des Bauelementes eine Differenzgeschwindigkeit aufweist.

9. Vorrichtung nach einem der vorstehenden Ansprüche, **dadurch gekennzeichnet, dass** das Fluid Luft oder eine Hydrautiktlüssigkeit ist.

10. Vorrichtung nach einem der vorstehenden Ansprüche oder nach dem Oberbegriff des Anspruchs 1, **dadurch gekennzeichnet, dass** dem Lamellenpaket eine Vibrationseinrichtung (46) zugeordnet ist.

11. Vorrichtung nach einem der vorstehenden Ansprüche, **dadurch gekennzeichnet, dass** dem Lamellenpaket (5, 9) eine Klemmeinrichtung (13) zugeordnet ist, mittels der die Stellung der Lamellen im Lamellenpaket fixierbar ist.

12. Vorrichtung nach einem der vorstehenden Ansprüche, **dadurch gekennzeichnet**, das das Formband (8) aus einem reckarmen Gewebe besteht, das zumindest auf der zur Folie (43) weisenden Seite mit einer elastischen BeSchichtung (17) und auf der gegenüberliegenden Seite vorzugsweise mit einer reibungsarmen Beschichtung (18) versehen ist.

13. Vorrichtung nach einem der vorstehenden Ansprüche, **gekennzeichnet durch** führungsleisten (14), die das Formband (8) im Bereich der Umlenkrollen und Antriebsrollen (15, 16) führen.

14. Vorrichtung nach einem der vorstehenden Ansprüche, **dadurch gekennzeichnet, dass** das Formband (8) mittels seitlicher Bordscheiben und/oder Bünde an den Umlenk- und/oder Antriebsrollen (15, 16) geführt ist.

15. Vorrichtung nach einem der vorstehenden Ansprüche, **dadurch gekennzeichnet, dass** jede Folienanformeinheit (19) eine Grundplatte (20) aufweist, auf welcher die Umlenkrollen (15) jeweils auf gegenüber liegenden Seiten des Lamellengehäuses (10) angeordnet sind.

16. Vorrichtung nach einem der vorstehenden Ansprüche, **dadurch gekennzeichnet, dass** das Lamellengehäuse (10) an der Grundplatte (20) verschiebbar gelagert ist.

17. Vorrichtung nach einem der vorstehenden Ansprüche, **gekennzeichnet durch** einen Antrieb zum Verschieben des Lamellengehäuses (10) an der Grundplatte (20).

18. Vorrichtung nach einem der vorstehenden Ansprüche, **dadurch gekennzeichnet, dass** der Antrieb zum Verschieben des Führungsgehäuses (10) an der Grundplatte als Zylinder (24) ausgebildet ist, der pneumatisch oder hydraulisch angetrieben wird und das Lamellengehäuse (10) über Führungswellen (23) bewegt.

19. Vorrichtung nach einem der vorstehenden Ansprüche, **gekennzeichnet durch** ein Bandspanneinrichtung zum Spannen des Formbandes (8).

20. Vorrichtung nach Anspruch 7, **gekennzeichnet durch** eine Rollenausführung mit Rollenscheiben (30, 31), die relativ zueinander beweglich ausgebildet sind und ihren Abstand je nach Verformung des Formbandes verändern, wobei die Rollenscheiben (30, 31) **durch** eine Feder (33) auf Abstand gehalten werden.

21. Vorrichtung nach Anspruch 20, **dadurch gekennzeichnet, dass** die Feder (33) eine solche Kennlinie aufweist, dass sie bei Deformation des Formbandes (8) im Bereich dies Lamellenpaketes (5, 9) der Querkontraktion des Formbandes (8) nachgibt.

22. Vorrichtung nach Anspruch 7, **dadurch gekennzeichnet, dass** das Lamellenpaket (5, 9) gegenüber der Flucht der beiden Umlenkrollen (15) vorsteht.

23. Vorrichtung nach einem der vorstehenden Ansprüche, **dadurch gekennzeichnet, dass** in einem Maschinenbett (35) eine Profiltransporteinrichtung (39) angeordnet ist, auf die das zu kaschierende Bauelement (1, 11) aufgelegt ist.

24. Vorrichtung nach Anspruch 23, **dadurch gekennzeichnet, dass** die Profiltransporteinrichtung (39) als Rollenhahn, Transportband ober Transportkette ausgebildet ist.

25. Vorrichtung nach Anspruch 24, **dadurch gekennzeichnet, dass** die Kettenglieder der Transportkette auf einer horizontalen Auflage des Maschinenbettes geführt sind und das diese das Bauelement (1, 11) an den Folienadruckeinheit(en) (19) unterhalb der Lamellenpakete (5, 9) vorbeibewegt.

26. Vorrichtung nach Anspruch 23, **dadurch gekennzeichnet, dass** zu beiden Seiten der Profilransporteinrichtung (39) Profilführungen (40) angeordnet sind, wovon zumindest eine Seite dieser Profilführungen automatisch anstellbar und über eine Positionssteuerung steuerbar sind.

27. Vorrichtung nach einem der vorstehenden Ansprüche, gekenntzeichnet durch eine Einrichtung zur Vorbehandlung (41), die vom zu kaschierenden Profilstab (1) durchlaufen wird und in der die zu kaschierende Oberfläche des Bauelementes vorzugsweise mit einem Haftvermittler geprimert wird.

28. Vorrichtung nach einem der vorstehenden Ansprüche, **dadurch gekennzeichnet**, das wenigstens eine oder mehrere der Folienandruckeinheit(en) (19) an einem Maschinengestell über Verstellachse(n) beweglich geführt ist.

29. Vorrichtung nach Anspruch 27, **dadurch gekennzeichnet, dass** die wenigstens eine oder mehrere der Folienandruckeinheiten (19) relativ zum Bauelement verschieblich geführt und/oder verdrehbar beweglich sind.

30. Vorrichtung nach Anspruch 27, **dadurch gekennzeichnet, dass** die wenigstens eine oder mehrere der Folienandruckeinheiten (19) jeweils auf einer bogenförmigen, insbesondere auf einer kreisbogenförmigen Führungsbahn (36) geführt sind, welche die Transporteinrichtung für das Bauelement (1,11) umgibt, so dass die Winkelausrichtung jeder Folienandruckeinheit (19) relativ zum Bauelement veränderlich ist.

31. Vorrichtung Anspruch 28, **dadurch gekennzeichnet, dass** sämtliche Verstellachsen über eine direkte oder indirekte Wegmessung verfügen, so dass über eine numerische Steuerung vorgegebene Wegpunkte abgerufen und angefahren werden können.

32. Verfahren zum Aufbringen von Folie auf ein Bauelement, insbesondere zum Ausbringen von Folie (43) auf ein langgestrecktes, profilartiges Bauelement mit einer vorgegeben Oberflächenkontur, insbesondere mittels einer Vorrichtung nach einem der vorstehenden Ansprüche, wobei die Folie (43) mittels eines Lammellenpaketes (5,9) aus relativ zueinander verstellbaren Lamellen (4, 6, 7) über ein zwischen dem Lamellenpaket (5,9) und der Folie (43) angeordnetes Formband (8) an das Bauelement (1,11) angedrückt wird, **dadurch gekennzeichnet, dass** das Formband (8) mit einer Geschwindigkeit antreibbar ist, die zur Durchlaufauchwindigkeit des Bauelementes eine Differenzgeschwindigkeit aufweist.

33. Verfahren nach Anspruch 32. **dadurch gekennzeichnet, dass** die Folie (43) und/oder das Bauelement (1, 11) vor dem Aufbringen der Folie einer Vorbehandlung unterzogen werden, die zumindest das Aufbringen eines Klebemittels auf die Folie (43) und/oder das Bauelement (1, 11) umfasst.

34. Verfahren nach Anspruch 32 oder 33, **dadurch gekennzeichnet, dass** nach dem Einrichten der Vorrichtung einzelne der oder alle der Einstellungen gespeichert werden, wenn bewegliche Funktionselemente der Vorrichtung an ein zu bearbeitende Profil mit unbekannter Oberflächengeometrie angepasst werden.

35. Verfahren nach Anspruch 34, **dadurch gekennzeichnet, dass** Bauelement auf eine Transporteinrichtung aufgelegt und mittels Profilführungen (40) ausgerichtet wird, wobei die Ist-Positionen der Profilführungen (40) in einer Datenverarbeitungsanlage gespeichert werden, um diese wieder abrufen zu können, wenn ein Bauelement dieser Bauart erneut zur Kaschierung ansteht.

36. Verfahren nach Anspruch 35, **dadurch gekennzeichnet, dass** das Bauelement auf die Transporteinrichtung aufgelegt und die Folienandruckeinheiten (19) so an das Bauelement (1,11) herangefahren werden, dass jeweilige Lamellenpaket (5,9) seine Zuordnung zur Profilierung erhält und die Kontur entsprechend nachbildet, woraufhin die Positionen einzelner Verstellachsen gespeichert werden.

37. Verfahren nach einem der Ansprüche 34 bis 36, **dadurch gekennzeichnet, dass** die Einrichtung für ein Bauelement mit unbekannter und noch nicht erfasster Profilierung in folgenden Schritten erfolgt:
a) das unbekannte Bauelement (1, 11) vorgegebener Profilierung wird in die Einrichtung eingeschoben/eingelegt,
b) die Profilführung (40) wird auf das unbekannte Bauelement (1, 11) eingestellt,
c) die Lamellenpakete (5) einzelner Folienandruckeinheiten (19) werden entspannt,
d) die Folienandruekeinheiten (19) werden manuell in ihre festgelegten Prositionen gefahren,
e) der Hohlraum (44) innerhalb der Lamellengehäuse (10) wird unter Druck gesetzt, die Lamellen (4, 6, 7) fahren manuell auf die Oberfläche des erfassten Bauelements und bilden dessen Kontur nach.
f) die Position des Lamellenpakets (5) wird klemmend arretiert.
g) der Anpressdruck im Zylinder (24) wird eingestellt und
h) sämtliche eingestellten Werte und Positionen werden gespeichert.

38. Verfahren nach einem der Ansprüche 34 bis 36, **dadurch gekennzeichnet, dass** die Einrichtung für ein Bauelement mit bereits bekannter und erfasster Profilierung in folgenden Schritten erfolgt:
a) sämtliche eingestellten Werte und Positionen werden - vorzugsweise entsprechend einer Eingabe - abgerufen,
b) eine Profilführung (40) stellt sich auf das erfasste Bauelement (1, 11) ein,
c) ein erfasstes Bauelement (1, 11) vorgegebener Profilierung wird in die Vorrichtung eingeschoben/eingelegt,
d) die Lamellenpakete (5) einzelner Folienandruckeinheiten (19) werden entspannt,
e) die Folienandruckeinheiten (19) fahren programmgesteuert in ihre festgelegten Positionen,
f) der Hohlraum (44) innerhalb der Lamellengehäuse (10) wird unter Druck gesetzt, die Lamellen (4, 6, 7) fahren auf die Oberfläche des erfassten Bauelements und bilden dessen Kontur nach.
g) die Position des Lamellenpakets (5) wird klemmend arretiert, und
h) der Anpressdruck im Zylinder (24) stellt stich automatisch auf den vorbekannten Wert ein.

## Claims

1. Apparatus for applying a sheet to a component, in particular for applying a sheet (43) to an elongate, profile-type component having a predetermined surface contour, comprising at least one or more blade assemblies (5, 9) consisting of blades (4, 6, 7) which can be adjusted relative to one another and are intended for pressing the sheet (43) onto the surface of the component (1, 11) so that it follows the contour thereof, wherein the individual blades (4, 6, 7) can be moved in the direction of the forming band (8) by means of a fluid-actuated drive, **characterized in that**
a) a forming band (8) is arranged between the component (1, 11) and the blade assembly (5, 9),
b) the blade assembly (5) is arranged in a blade housing (10) from which the end regions of the individual blades (4, 6, 7) facing the forming band (8) project, wherein the fluid can be introduced into a cavity (44) between the blade assembly (5, 9) and the enclosing blade housing (10),
c) wherein a fillable hose (12) or a bellows or a membrane is arranged in the cavity (44) between the blade assembly (5, 9) and the blade housing (10).

2. Apparatus according to Claim 1, **characterized by** at least one or more sheet-pressing units (19) which each have one or more of the blade assemblies (5, 9).

3. Apparatus according to either of the preceding claims, **characterized in that** each blade assembly (5, 9) comprises a plurality of central thin blades (4) and thicker edge blades (6, 7) which each laterally enclose these central blades as a whole.

4. Apparatus according to Claim 3, **characterized in that** the thickness d of the individual central blades (4) satisfies the following condition: d ≥ 0.3 mm.

5. Apparatus according to Claim 3, **characterized in that** the thickness d of the individual central blades (4) satisfies the following condition: 0.8 ≥ d ≥ 0.3 mm.

6. Apparatus according to one of the preceding claims, **characterized in that** the blades (4, 6, 7) have a rounded design in their region facing the component.

7. Apparatus according to one of the preceding claims, **characterized in that** the forming band (8) is designed as a revolving flat belt which revolves endlessly via deflection rollers (15) and/or a drive roller (26) and forms an intermediate bearing between the blade assembly (5, 9) and the profile or sheet contour.

8. Apparatus according to one of the preceding claims, **characterized in that** the forming band (8) can be driven at a speed which has a differential speed with respect to the throughput speed of the component.

9. Apparatus according to one of the preceding claims, **characterized in that** the fluid is air or a hydraulic liquid.

10. Apparatus according to one of the preceding claims or according to the preamble of Claim 1, **characterized in that** the blade assembly is assigned a vibration device (46).

11. Apparatus according to one of the preceding claims, **characterized in that** the blade assembly (5, 9) is assigned a clamping device (13) by means of which the position of the blades within the blade assembly can be fixed.

12. Apparatus according to one of the preceding claims, **characterized in that** the forming band (8) is made of a low-stretch fabric which is provided with an elastic coating (17) at least on the side facing the sheet (43) and preferably with a low-friction coating (18) on the opposite side.

13. Apparatus according to one of the preceding claims, **characterized by** guide strips (14) which guide the forming band (8) in the region of the deflection rollers and drive rollers (15, 26).

14. Apparatus according to one of the preceding claims, **characterized in that** the forming band (8) is guided on the deflection and/or drive rollers (15, 26) by means of lateral edge discs and/or collars.

15. Apparatus according to one of the preceding claims, **characterized in that** each sheet-forming unit (19) has a baseplate (20) on which the deflection rollers (15) are each arranged on opposite sides of the blade housing (10).

16. Apparatus according to one of the preceding claims, **characterized in that** the blade housing (10) is displaceably mounted on the baseplate (20).

17. Apparatus according to one of the preceding claims, **characterized by** a drive for displacing the blade housing (10) on the baseplate (20).

18. Apparatus according to one of the preceding claims, **characterized in that** the drive for displacing the guide housing (10) on the baseplate is designed as a cylinder (24) which is driven pneumatically or hydraulically and which moves the blade housing (10) via guide shafts (23).

19. Apparatus according to one of the preceding claims, **characterized by** a band-tensioning device for tensioning the forming band (8).

20. Apparatus according to Claim 7, **characterized by** a roller design having roller discs (30, 31) which are designed to be movable relative to one another and change their spacing depending on the deformation of the forming band, wherein the roller discs (30, 31) are held apart by a spring (33).

21. Apparatus according to Claim 20, **characterized in that** the spring (33) has a characteristic such that it yields to the transverse contraction of the forming band (8) when the forming band (8) is deformed in the region of the blade assembly (5, 9).

22. Apparatus according to Claim 7, **characterized in that** the blade assembly (5, 9) projects with respect to the alignment of the two deflection rollers (15).

23. Apparatus according to one of the preceding claims, **characterized in that** a profile conveyor device (39) on which the component (1, 11) to be laminated is placed is arranged in a machine bed (35).

24. Apparatus according to Claim 23, **characterized in that** the profile conveyor device (39) is designed as a roller conveyor, conveyor belt or conveyor chain.

25. Apparatus according to Claim 24, **characterized in that** the chain links of the conveyor chain are guided on a horizontal bearing surface of the machine bed, and **in that** this conveyor chain moves the component (1, 11) past the sheet-pressing unit or units (19), below the blade assemblies (5, 9).

26. Apparatus according to Claim 23, **characterized in that** profile guides (40) are arranged on both sides of the profile conveyor device (39), of which at least one side of these profile guides can be automatically positioned and can be controlled via a position control system.

27. Apparatus according to one of the preceding claims, **characterized by** a pretreatment device (41) through which the profiled bar (1) to be laminated passes and in which the surface of the component that is to be laminated is preferably primed with an adhesion promoter.

28. Apparatus according to one of the preceding claims, **characterized in that** at least one or more of the sheet-pressing units (19) are movably guided on a machine frame over an adjustment axis or adjustment axes.

29. Apparatus according to Claim 27, **characterized in that** the at least one or more of the sheet-pressing units (19) are displaceably guided and/or rotatably movable relative to the component.

30. Apparatus according to Claim 27, **characterized in that** the at least one or more of the sheet-pressing units (19) are each guided along a curved, in particular along a circular arc-shaped guide track (36) which surrounds the conveyor device for the component (1, 11), with the result that the angular orientation of each sheet-pressing unit (19) is variable relative to the component.

31. Apparatus according to Claim 28, **characterized in that** all the adjustment axes are provided with direct or indirect path measurement such that predetermined path points can be retrieved and proceeded to via a numerical control system.

32. Method for applying a sheet to a component, in particular for applying a sheet (43) to an elongate, profile-type component having a predetermined surface contour, in particular by means of an apparatus according to one of the preceding claims, wherein the sheet (43) is pressed onto the component (1, 11) by means of a blade assembly (5, 9) consisting of blades (4, 6, 7) which can be adjusted relative to one another, and via a forming band (8) arranged between the blade assembly (5, 9) and the sheet (43), **characterized in that** the forming band (8) can be driven at a speed which has a differential speed with respect to the throughput speed of the component.

33. Method according to Claim 32, **characterized in that**, prior to applying the sheet, the sheet (43) and/or the component (1, 11) are subjected to a pretreatment which at least comprises the application of an adhesive to the sheet (43) and/or the component (1, 11).

34. Method according to Claim 32 or 33, **characterized in that**, after the apparatus has been set up, individual settings or all the settings are stored if movable functional elements of the apparatus are adapted to a profile for processing that has an unknown surface geometry.

35. Method according to Claim 34, **characterized in that** the component is placed on a conveyor device and is aligned by means of profile guides (40), wherein the actual positions of the profile guides (40) are stored in a data-processing unit so that they can be retrieved again if a component of this design type is present once more for lamination.

36. Method according to Claim 35, **characterized in that** the component is placed on the conveyor device and the sheet-pressing units (19) are moved up to the component (1, 11) such that the respective blade assembly (5, 9) is coordinated relative to the profiling and correspondingly reproduces the contour, whereupon the positions of individual adjustment axes are stored.

37. Method according to one of Claims 34 to 36, **characterized in that** the set-up for a component having an unknown and not yet recorded profiling involves the following steps:
a) the unknown component (1, 11) of predetermined profiling is inserted/placed in the device,
b) the profile guide (40) is set to the unknown component (1, 11),
c) the blade assemblies (5) of individual sheet-pressing units (19) are relaxed,
d) the sheet-pressing units (19) are moved manually into their fixed positions,
e) the cavity (44) inside the blade housing (10) is placed under pressure, and the blades (4, 6, 7) move manually onto the surface of the component to be recorded and reproduces its contour,
f) the position of the blade assembly (5) is secured by clamping,
g) the pressing force in the cylinder (24) is set, and
h) all the set values and positions are stored.

38. Method according to one of Claims 34 to 36, **characterized in that** the set-up for a component having an already known and recorded profiling involves the following steps:
a) all the set values and positions are retrieved, preferably corresponding to an input,
b) a profile guide (40) is set to the recorded component (1, 11),
c) a recorded component (1, 11) of predetermined profiling is inserted/placed in the apparatus,
d) the blade assemblies (5) of individual sheet-pressing units (19) are relaxed,
e) the sheet-pressing units (19) move under program control into their fixed positions,
f) the cavity (44) inside the lamina housing (10) is placed under pressure, and the blades (4, 6, 7) move onto the surface of the recorded component and reproduce its contour,
g) the position of the blade assembly (5) is secured by clamping, and
h) the pressing force in the cylinder (24) is set automatically to the pre-known value.

## Revendications

1. Dispositif pour l'application d'un film sur un élément, en particulier pour l'application d'un film (43) sur un élément allongé profilé avec un contour de surface défini, comportant au moins un ou plusieurs paquet(s) de lamelles (5, 9) avec des lamelles (4, 6, 7) réglables les unes par rapport aux autres pour presser le film conformément au contour sur la surface de l'élément (1, 11), lesdites différentes lamelles (4, 6, 7) étant mobiles vers la bande profilée (8) au moyen d'un système d'entraînement actionné par un fluide,
**caractérisé en ce que**
a) une bande profilée (8) est disposée entre l'élément (1, 11) et le paquet de lamelles (5, 9),
b) le paquet de lamelles (5) est disposé dans un carter (10) hors duquel s'avancent en saillie les zones d'extrémité des différentes lamelles (4, 6, 7), orientées vers la bande profilée (8), ledit fluide pouvant être introduit dans une cavité (44) entre le paquet de lamelles (5, 9) et le carter (10) entourant ce dernier,
c) un tuyau flexible (12) apte à être rempli ou un soufflet ou une membrane étant disposés dans la cavité (44) entre le paquet de lamelles (5, 9) et le carter (10).

2. Dispositif selon la revendication 1, **caractérisé par** au moins une ou plusieurs unités de compression du film (19), lesquelles comportent chacune un ou plusieurs paquets de lamelles (5, 9).

3. Dispositif selon l'une quelconque des revendications précédentes, **caractérisé en ce que** chaque paquet de lamelles (5, 9) comporte plusieurs lamelles (4) centrales minces et des lamelles de bordure (6, 7) plus épaisses, entourant latéralement, en formant un tout, lesdites lamelles centrales.

4. Dispositif selon la revendication 3, **caractérisé en ce que** l'épaisseur d des différentes lamelles centrales (4) satisfait à la condition suivante : d > -0,3 mm.

5. Dispositif selon la revendication 3, **caractérisé en ce que** l'épaisseur d des différentes lamelles centrales (4) satisfait à la condition suivante : 0,8 >= d > -0,3 mm.

6. Dispositif selon l'une quelconque des revendications précédentes, **caractérisé en ce que** les lamelles (4, 6, 7) sont arrondies dans leur zone orientée vers l'élément.

7. Dispositif selon l'une quelconque des revendications précédentes, **caractérisé en ce que** la bande profilée (8) est réalisée sous la forme d'une courroie plate continue, qui tourne en continu sur des poulies de renvoi (15) et/ou une poulie d'entraînement (16) et forme un palier intermédiaire entre le paquet de lamelles (5, 9) et le contour du profilé ou du film.

8. Dispositif selon l'une quelconque des revendications précédentes, **caractérisé en ce que** la bande profilée (8) peut être actionnée avec une vitesse qui est différente de la vitesse de défilement de l'élément.

9. Dispositif selon l'une quelconque des revendications précédentes, **caractérisé en ce que** le fluide est de l'air ou un liquide hydraulique.

10. Dispositif selon l'une quelconque des revendications précédentes ou selon le préambule de la revendication 1, **caractérisé en ce qu'**un dispositif de vibration (46) est associé au paquet de lamelles.

11. Dispositif selon l'une quelconque des revendications précédentes, **caractérisé en ce qu'**un dispositif de serrage (13), qui permet de bloquer la position des lamelles dans le paquet de lamelles, est associé au paquet de lamelles (5, 9).

12. Dispositif selon l'une quelconque des revendications précédentes, **caractérisé en ce que** la bande profilée (8) est réalisée dans un tissu à faible allongement qui, au moins sur la face orientée vers le film (43), est muni d'un revêtement (17) élastique et, sur la face opposée, est muni de préférence d'un revêtement (18) à faible frottement.

13. Dispositif selon l'une quelconque des revendications précédentes, **caractérisé par** des rebords de guidage (14) qui guident la bande profilée (8) dans la zone des poulies de renvoi et des poulies d'entraînement (15,16).

14. Dispositif selon l'une quelconque des revendications précédentes, **caractérisé en ce que** la bande profilée (8) est guidée sur les poulies de renvoi et/ou les poulies d'entraînement (15, 16) au moyen de rebords latéraux et/ou de collets de butée.

15. Dispositif selon l'une quelconque des revendications précédentes, **caractérisé en ce que** chaque unité de compression du film (19) comporte une plaque de base (20), sur laquelle les poulies de renvoi (15) sont disposées respectivement sur des côtés face à face du carter (10) des lamelles.

16. Dispositif selon l'une quelconque des revendications précédentes, **caractérisé en ce que** le carter (10) des lamelles est monté de manière mobile sur la plaque de base (20).

17. Dispositif selon l'une quelconque des revendications précédentes, **caractérisé par** un système d'entraînement pour le déplacement du carter (10) des lamelles sur la plaque de base (20).

18. Dispositif selon l'une quelconque des revendications précédentes, **caractérisé en ce que** le système d'entraînement pour le déplacement du carter (10) des lamelles sur la plaque de base (20) est réalisé sous forme de vérin (24) qui est actionné par voie pneumatique ou hydraulique et qui déplace le carter (10) des lamelles par l'intermédiaire d'arbres de guidage (23).

19. Dispositif selon l'une quelconque des revendications précédentes, **caractérisé par** un dispositif de serrage destiné à bloquer la bande profilée (8).

20. Dispositif selon la revendication 7, **caractérisé par** une réalisation avec des plateaux à roulettes (30, 31), qui sont mobiles l'un par rapport à l'autre et modifient leur écartement en fonction de la déformation de la bande profilée, lesdits plateaux à roulettes (30, 31) étant maintenus à distance l'un de l'autre par un ressort (33).

21. Dispositif selon la revendication 20, **caractérisé en ce que** le ressort (33) comporte une courbe caractéristique telle que, en cas de déformation de la bande profilée (8) dans la zone du paquet de lamelles (5, 9), il relâche la contraction transversale de la bande profilée (8).

22. Dispositif selon la revendication 7, **caractérisé en ce que** le paquet de lamelles (5, 9) est en saillie par rapport à l'alignement des deux poulies de renvoi (15).

23. Dispositif selon l'une quelconque des revendications précédentes, **caractérisé en ce qu'**un dispositif de transport du profilé (39), sur lequel est posé l'élément à revêtir (1, 11), est disposé dans un plateau (35) de la machine.

24. Dispositif selon la revendication 23, **caractérisé en ce que** le dispositif de transport du profilé (39) est une bande à roulettes, une bande transporteuse ou une chaîne de transport.

25. Dispositif selon la revendication 24, **caractérisé en ce que** les maillons de la chaîne de transport sont guidés sur un support horizontal du plateau de la machine et **en ce que** ledit support déplace l'élément (1, 11) le long des unités de compression du film (19) en dessous des paquets de lamelles (5, 9).

26. Dispositif selon la revendication 23, **caractérisé en ce que** sur les deux côtés du dispositif de transport du profilé (39) sont disposés des guidages (40), dont au moins un côté de ces guidages peut être actionné automatiquement et peut être commandé par un dispositif de commande de position.

27. Dispositif selon l'une quelconque des revendications précédentes, **caractérisé par** un dispositif de traitement préliminaire (41), à travers lequel défile la tige profilée (1) à revêtir et dans lequel la surface à revêtir de ladite tige profilée est revêtue d'une couche de base, constituée de préférence d'un agent adhésif.

28. Dispositif selon l'une quelconque des revendications précédentes, **caractérisé en ce qu'**au moins une ou plusieurs des unités de compression du film (19) sont montées de manière mobile sur un bâti au moyen d'arbre(s) de réglage.

29. Dispositif selon la revendication 27, **caractérisé en ce que** ladite au moins une ou plusieurs des unités de compression du film (19) sont montées mobiles par rapport à l'élément à revêtir et/ou sont mobiles en rotation.

30. Dispositif selon la revendication 27, **caractérisé en ce que** ladite au moins une ou plusieurs des unités de compression du film (19) sont montées respectivement sur une bande de guidage (36) en forme de courbe, en particulier en forme d'arc de cercle, laquelle entoure le dispositif de transport de l'élément (1,11) à revêtir, de telle sorte que l'orientation angulaire de chaque unité de compression du film (19) est variable par rapport à l'élément à revêtir.

31. Dispositif selon la revendication 28, **caractérisé en ce que** tous les arbres de réglage comportent une mesure directe ou indirecte de la trajectoire, de telle sorte que des points prédéfinis de la trajectoire peuvent être chargés par l'intermédiaire d'une commande numérique ou lesdits arbres peuvent être amenés vers ceux-ci par l'intermédiaire de ladite commande numérique.

32. Procédé pour l'application d'un film sur un élément, en particulier pour l'application d'un film (43) sur un élément allongé profilé avec un contour de surface défini, en particulier au moyen d'un dispositif selon l'une quelconque des revendications précédentes, dans lequel le film (43) est pressé au moyen d'un paquet de lamelles (5, 9), formé par des lamelles (4, 6, 7) réglables les unes par rapport aux autres, sur l'élément (1, 11) par l'intermédiaire d'une bande profilée (8) disposée entre le paquet de lamelles (5, 9) et le film (43), **caractérisé en ce que** la bande profilée (8) peut être actionnée avec une vitesse qui est différente de la vitesse de défilement de l'élément à revêtir.

33. Procédé selon la revendication 32, **caractérisé en ce que** le film (43) et/ou l'élément (1, 11) sont soumis, avant l'application du film, à un traitement préliminaire, qui comporte au moins le dépôt d'un agent adhésif sur le film (43) et/ou l'élément (1,11).

34. Procédé selon la revendication 32 ou 33, **caractérisé en ce que** certains des réglages ou tous les réglages sont mémorisés après le réglage du dispositif lorsque des éléments fonctionnels mobiles du dispositif sont ajustés à un profilé à traiter ayant une surface à géométrie inconnue.

35. Procédé selon la revendication 34, **caractérisé en ce que** l'élément à revêtir est posé sur un dispositif de transport et est orienté au moyen de guidages profilés (40), les positions réelles des guidages profilés (40) étant mémorisées dans un dispositif de traitement des données afin de pouvoir charger à nouveau celles-ci lorsqu'un élément de ce type est à nouveau prêt à être revêtu.

36. Procédé selon la revendication 35, **caractérisé en ce que** l'élément est posé sur le dispositif de transport et les unités de compression du film (19) sont amenées vers l'élément (1, 11), de telle sorte que le paquet de lamelles (5, 9) respectif reçoit son association au profilage et reproduit de manière correspondante le contour, à la suite de quoi les positions de différents arbres de réglage sont mémorisées.

37. Procédé selon l'une quelconque des revendications 34 à 36, **caractérisé en ce que** le réglage pour un élément à profilage inconnu et non encore enregistré s'effectue selon les étapes suivantes :
a) l'élément (1, 11) inconnu à profilage prédéfini est introduit/inséré dans le dispositif,
b) le guidage profilé (40) est réglé en fonction de l'élément (1, 11) inconnu,
c) les paquets de lamelles (5) de différentes unités de compression du film (19) sont détendus,
d) les unités de compression du film (19) sont guidées manuellement dans leurs positions définies,
e) la cavité (44) à l'intérieur du carter (10) des lamelles est mise sous pression, les lamelles (4, 6, 7) sont amenées manuellement sur la surface de l'élément détecté et suivent le contour de celui-ci,
f) la position du paquet de lamelles (5) est immobilisée par serrage,
g) la force de pression est réglée dans le vérin (24), et
h) toutes les valeurs et positions réglées sont mémorisées.

38. Procédé selon l'une quelconque des revendications 34 à 36, **caractérisé en ce que** le réglage pour un élément à profilage déjà connu et enregistré s'effectue selon les étapes suivantes :
a) toutes les valeurs et positions réglées sont chargées - de préférence conformément à leur enregistrement -,
b) un guidage profilé (40) se règle en fonction de l'élément (1, 11) détecté,
c) un élément (1, 11) détecté, à profilage prédéfini, est introduit/inséré dans le dispositif,
d) les paquets de lamelles (5) de différentes unités de compression du film (19) sont détendus,
e) les unités de compression du film (19) sont guidées, de manière commandée par le programme, dans leurs positions définies,
f) la cavité (44) à l'intérieur du carter (10) des lamelles est mise sous pression, les lamelles (4, 6, 7) se déplacent vers la surface de l'élément détecté et suivent le contour de celui-ci,
g) la position du paquet de lamelles (5) est immobilisée par serrage, et
h) la force de pression se règle automatiquement dans le vérin (24) à la valeur connue antérieurement.
